# EUROPÄISCHE PATENTSCHRIFT

(11) **EP 4 706 879 B1**
(45) Veröffentlichungstag und Bekanntmachung des Hinweises auf die Patenterteilung: **30.09.2026**
(21) Anmeldenummer: 25199793.8
(22) Anmeldetag: 03.09.2025
(51) Int. Cl.: B23Q 1/54, B23Q 1/62, B23Q 39/02, B23Q 39/00

(54) **WERKZEUGMASCHINE MIT 5-ACHS-BEARBEITUNGSEINHEIT**
MACHINE TOOL WITH 5-AXIS MACHINING UNIT
MACHINE-OUTIL AVEC UNITÉ D'USINAGE À 5 AXES

(30) Priorität: 09.09.2024 DE 102024002881
(43) Veröffentlichungstag der Anmeldung: 11.03.2026
(73) Patentinhaber: Grob-Werke GmbH & Co. KG, 87719 Mindelheim (DE)
(72) Erfinder: Birzle, Herbert, 87727 Babenhausen (DE); Huber, Manuel, 86558 Weichenried (DE); Schömig, Christian, 86498 Kettershausen (DE); Weishaupt, Michael, 86825 Bad Wörishofen (DE)
(74) Vertreter: KASTEL Patentanwälte PartG mbB

(56) Entgegenhaltungen:
- EP-A1- 2 255 921
- EP-A1- 2 537 628
- EP-A2- 0 985 489
- EP-A2- 1 563 946
- EP-A2- 1 872 898
- EP-B1- 1 250 976
- EP-B1- 1 358 042
- DE-A1- 10 348 691
- DE-A1- 102010 002 268
- US-A1- 2006 133 903

## Beschreibung

Die Erfindung betrifft eine Werkzeugmaschine mit wenigstens einer Bearbeitungseinheit, die eine um wenigstens fünf Achsen verstellbare Arbeitsspindel aufweist.

Die Erfindung liegt insbesondere auf dem Gebiet der Werkzeugmaschinen, insbesondere der Werkzeugmaschinen zur Bearbeitung von Gigacasting-Bauteilen.

Werkzeugmaschinen (seltener auch Bearbeitungsmaschinen) sind Maschinen zur Fertigung von Werkstücken mit Werkzeugen, deren Bewegung zueinander durch die Maschine vorgegeben wird. Zu den wichtigsten Vertretern zählen Dreh- und Fräsmaschinen. Insbesondere betrifft die Erfindung eine als Bearbeitungszentrum ausgebildete Werkzeugmaschine. Ein Bearbeitungszentrum (BAZ), auch Fertigungszentrum genannt, ist eine mehrachsige NC-fähige Werkzeugmaschine, die sich für die Komplettbearbeitung eignet, also die Funktionen von Drehmaschine, Fräsmaschine und Bohrmaschine umfasst. Außerdem verfügt sie über einen automatischen Werkzeugwechsel. Einige Ausführungsformen der Erfindung sind als Bearbeitungszentren mit zusätzlichem automatischem Werkstückwechsel ausgebildet, diese werden auch als Flexible Fertigungszelle bezeichnet.

Zum technologischen Hintergrund wird auf folgende Literaturstellen verwiesen:
[1] EP 0 232 548 A2
[2] DE 10 2010 002 268 A1
[3] US 2006/0291971 A1
[4] WO 2015/014948 A2
[5] DE 103 48 691A1
[6] EP 1 872 898 A2
[7] EP 1 250 976 B1
[8] EP 2 537 628 A1
[9] US 2006/0 133 903 A1
[10] EP 2 255 921 A1
[11] EP 1 563 946 A2
[12] EP 1 358 042 B1
[13] EP 0 985 489 A2

Insbesondere offenbaren die Literaturstellen [2], [5] und [8] mehrachsige Werkzeugmaschinen mit mehreren Bewegungseinheiten., wobei [2] eine Werkzeugmaschine nach dem Oberbegriff des Anspruchs 1 offenbart.

Die Erfindung hat sich zur Aufgabe gestellt, eine verbesserte Werkzeugmaschine zur wenigstens fünfachsigen Bearbeitung von insbesondere großvolumigen Werkstücken zur Verfügung zu stellen.

Zum Lösen dieser Aufgabe schafft die Erfindung eine Werkzeugmaschine nach Anspruch 1.

Vorteilhafte Ausgestaltungen sind Gegenstand der Unteransprüche.

Die Erfindung schafft gemäß einem Aspekt davon eine Werkzeugmaschine mit einem Grundgestell mit einer ersten Linearführung und wenigstens einer ersten Bearbeitungseinheit, die entlang der ersten Linearführung an dem Grundgestell in Richtung einer ersten Linearachse bewegbar ist und folgende unabhängig voneinander computergesteuert bewegbare Bewegungseinheiten aufweist: eine erste Bewegungseinheit mit einer zweiten Linearführung, welche erste Bewegungseinheit mittels der ersten Linearführung an dem Grundgestell in Richtung der ersten Linearachse bewegbar ist,
eine zweite Bewegungseinheit mit einer dritten Linearführung, welche zweite Bewegungseinheit an der zweiten Linearführung in Richtung einer quer zu der ersten Linearachse verlaufenden zweiten Linearachse bewegbar ist,
eine dritte Bewegungseinheit mit einem ersten Schwenklager, welche dritte Bewegungseinheit an der dritten Linearführung in Richtung einer quer zu der ersten Linearachse und quer zu der zweiten Linearachse im Wesentlichen horizontal verlaufenden dritten Linearachse bewegbar ist,
eine vierte Bewegungseinheit mit einem Schwenkkopf, welche vierte Bewegungseinheit mittels des ersten Schwenklagers an der dritten Bewegungseinheit um eine erste Schwenkachse schwenkbar ist,
eine fünfte Bewegungseinheit, die mittels wenigstens einen zweiten Schwenklagers an dem Schwenkkopf um eine sich quer zu der ersten Schwenkachse erstreckende zweite Schwenkachse schwenkbar ist, wobei eine Arbeitsspindel um eine Spindelachse drehbar an der fünften Bewegungseinheit angeordnet ist,
wobei die Arbeitsspindel exzentrisch mit Abstand zu der ersten und zweiten Schwenkachse an der fünften Bewegungseinheit gelagert ist.

Bei einigen Ausführungsformen der Erfindung ist die Werkzeugmaschine als Bearbeitungszentrum (BAZ), insbesondere horizontales Bearbeitungszentrum mit horizontaler Baurichtung der Hauptspindel ausgebildet.

Bei einigen Ausführungsformen ist die Werkzeugmaschine als mehrspindeliges Bearbeitungszentrum mit wenigstens zwei Spindeln ausgebildet.

Komplexe, aufwendig zu bearbeitende Geometrien können heutzutage ebenfalls mehrspindelig bearbeitet werden. Vorzugsweise das mehrspindelige BAZ für eine Fünf-Achs-Simultanbearbeitung eingerichtet. Bei komplexen Gussteilen (Aluminium oder Stahl) dauert die Bearbeitung meist mehrere Minuten - oder sogar Stunden. Durch die Fertigung mit mehrspindligen BAZ lässt sich die Ausbringung bezogen auf den Flächenbedarf der Maschine also deutlich erhöhen.

Einige Vorteile der mehrspindligen Bearbeitung gegenüber der einspindligen sind:
- höhere Ausbringung pro m² Stellfläche
- Verringerung der Personalkosten, da weniger Maschinen installiert werden müssen
- Niedrigere "Life-Cycle Costs"
- höchste Produktivität

Einige bevorzugte Ausgestaltungen der Werkzeugmaschine haben dazu zusätzlich zu der ersten Bearbeitungseinheit eine zweite Bearbeitungseinheit, wobei die erste Bearbeitungseinheit und die zweite Bearbeitungseinheit unabhängig voneinander entlang der ersten Linearführung an dem Grundgestell in Richtung der ersten Linearachse bewegbar sind und wobei jede der ersten und zweiten Bearbeitungseinheit die erste bis fünfte Bewegungseinheit aufweist, die unabhängig voneinander computergesteuert bewegbar sind.

Dabei ist weiter vorzugsweise die Arbeitsspindel jeder der ersten und zweiten Bearbeitungseinheit exzentrisch mit Abstand zu der ersten und zweiten Schwenkachse an der fünften Bewegungseinheit gelagert.

Bei einigen Ausführungsformen ist hierbei vorgesehen, dass die erste und zweite Bearbeitungseinheit spiegelsymmetrisch zueinander ausgebildet sind.

Bei einigen Ausführungsformen ist vorgesehen, dass der Schwenkkopf der vierten Bewegungseinheit ein Gabelkopf ist, der die fünfte Bewegungseinheit umgreift, wobei die fünfte Bewegungseinheit mittels zweiter Schwenklager an dem Gabelkopf auf gegenüberliegenden Seiten um die sich quer zu der ersten Schwenkachse erstreckende zweite Schwenkachse schwenkbar ist.

Demnach ist gemäß einigen Ausführungsformen eine Werkzeugmaschine geschaffen mit einem Grundgestell mit einer ersten Linearführung, einer ersten Bearbeitungseinheit und einer zweiten Bearbeitungseinheit, die unabhängig voneinander mittels der ersten Linearführung an dem Grundgestell in Richtung einer ersten Linearachse bewegbar sind,
wobei jede der ersten und zweiten Bearbeitungseinheit jeweils folgende unabhängig voneinander computergesteuert bewegbare Bewegungseinheiten aufweist:
eine erste Bewegungseinheit mit einer zweiten Linearführung, welche erste Bewegungseinheit mittels der ersten Linearführung an dem Grundgestell in Richtung der ersten Linearachse bewegbar ist,
eine zweite Bewegungseinheit mit einer dritten Linearführung, welche zweite Bewegungseinheit an der zweiten Linearführung in Richtung einer quer zur ersten Linearachse verlaufenden zweiten Linearachse bewegbar ist,
eine dritte Bewegungseinheit mit einem ersten Schwenklager, welche dritte Bewegungseinheit an der dritten Linearführung in Richtung einer quer zu der ersten Linearachse und quer zu der zweiten Linearachse im Wesentlichen horizontal verlaufenden dritten Linearachse bewegbar ist,
eine vierte Bewegungseinheit mit einem Gabelkopf, welche vierte Bewegungseinheit mittels des ersten Schwenklagers an der dritten Bewegungseinheit um eine erste Schwenkachse schwenkbar ist,
eine fünfte Bewegungseinheit, die durch den Gabelkopf umgriffen wird und mittels zweiter Schwenklager an dem Gabelkopf auf gegenüberliegenden Seiten um eine sich quer zu der ersten Schwenkachse erstreckende zweite Schwenkachse schwenkbar ist, und
eine Arbeitsspindel, die um eine Spindelachse drehbar an der fünften Bewegungseinheit angeordnet ist,
wobei die Arbeitsspindel jeder der ersten und zweiten Bearbeitungseinheit exzentrisch mit Abstand zu der ersten und zweiten Schwenkachse an der fünften Bewegungseinheit gelagert ist.

Bei einigen Ausführungsformen ist vorgesehen, dass die erste und zweite Schwenkachse in einer Ebene liegen und die Arbeitsspindel mit einem Abstand zu der Ebene gelagert ist.

Bei einigen Ausführungsformen ist vorgesehen, dass die Arbeitsspindel derart exzentrisch gelagert ist, dass die Kontur eines Spindelkastens zum Lagern der Arbeitsspindel quer zur Spindelachse über den Gabelkopf hervorsteht und so die Außenkontur eines aus der vierten und fünften Bewegungseinheit gebildeten Bearbeitungskopfes bildet.

Bei einigen Ausführungsformen ist vorgesehen, dass die erste Linearachse im Wesentlichen horizontal verläuft.

Bei einigen Ausführungsformen ist vorgesehen, dass die zweite Linearachse senkrecht zur ersten Linearachse und/oder im Wesentlichen vertikal verläuft.

Bei einigen Ausführungsformen ist vorgesehen, dass die dritte Linearachse und/oder die erste Schwenkachse senkrecht zur ersten und zweiten Linearachse verläuft.

Bei einigen Ausführungsformen ist vorgesehen, dass die erste Schwenkachse parallel zu der dritten Linearachse und/oder im Wesentlichen horizontal verläuft.

Bei einigen Ausführungsformen ist vorgesehen, dass die zweite Schwenkachse senkrecht zu der ersten Schwenkachse verläuft und/oder die erste Schwenkachse in einem Kreuzungspunkt schneidet.

Bei einigen Ausführungsformen ist vorgesehen, dass die erste Bewegungseinheit einen Ständer aufweist.

Bei einigen Ausführungsformen ist vorgesehen, dass die zweite Bewegungseinheit einen Kreuzschlitten aufweist.

Bei einigen Ausführungsformen ist vorgesehen, dass die dritte Bewegungseinheit einen Schlitten - im Folgenden auch Z-Schlitten genannt - aufweist.

Bei einigen Ausführungsformen ist vorgesehen, dass die fünfte Bewegungseinheit einen Spindelkasten aufweist.

Bei einigen Ausführungsformen ist vorgesehen, dass die dritte Linearführung Führungsschienen an der zweiten Bewegungseinheit aufweist, wobei die dritte Bewegungseinheit an den Führungsschienen der dritten Linearführung bewegbar geführte Führungselemente aufweist. Als Führungselemente sind beispielsweise Führungswagen vorgesehen. Die besondere Anordnung von Führungswagen oder dergleichen Führungselementen und Führungsschienen der dritten Bewegungseinheit liegt bei einigen Ausführungsformen der Erfindung darin, dass die Führungsschienen am Kreuzschlitten befestigt und die Führungsschuhe oder dergleichen Führungselemente am Z-Schlitten angeordnet sind, während dies bei vergleichbaren Werkzeugmaschinen andersherum gelöst ist. Die Lösung gemäß den Ausführungsformen der Erfindung hat den Vorteil, dass auf diese Weise ein im weiter unten näher erläuterter Tunnel vorteilhaft realisiert und mit den Abstreifern abgedichtet werden kann.

Bei einigen Ausführungsformen ist vorgesehen, dass eine sich quer zur dritten Linearachse erstreckende Abdeckungseinrichtung zum Abtrennen eines Arbeitsraumes von den Linearführungen vorgesehen ist, die mit wenigstens einer Öffnung für die jeweilige fünfte Bewegungseinheit versehen ist, wobei die jeweilige Öffnung mittels der zweiten Bewegungseinheit in Richtung der ersten und der zweiten Linearachse bewegbar ist, wobei die fünfte Bewegungseinheit durch Bewegung der dritten Bewegungseinheit in Richtung der dritten Linearachse zwischen einer vorgeschobenen Position, in der die fünfte Bewegungseinheit in dem Arbeitsraum angeordnet ist, und einer zurückgezogenen Position, in der die fünfte Bewegungseinheit im Wesentlich hinter der Abdeckungseinrichtung angeordnet ist, bewegbar ist.

Bei einigen Ausführungsformen ist vorgesehen, dass an der zweiten Bewegungseinheit ein Abdeckungstunnel befestigt ist, in den die vierte und fünfte Bewegungseinheit durch Bewegung der dritten Bewegungseinheit in eine zurückgezogene Position einfahrbar ist und aus dem die vierte und fünfte Bewegungseinheit durch Bewegung der dritten Bewegungseinheit in einen Arbeitsraum hin fahrbar ist.

Bei einigen Ausführungsformen ist vorgesehen, dass die Abdeckungseinrichtung eine mit der zweiten Bewegungseinheit der ersten Bearbeitungseinheit in Richtung der ersten und zweiten Linearachse mitbewegbare erste Abdeckung mit einer ersten Öffnung und eine mit der ersten Bewegungseinheit der zweiten Bearbeitungseinheit in Richtung der ersten und zweiten Linearachse bewegbare zweite Abdeckung mit einer zweiten Öffnung aufweist.

Bei einigen Ausführungsformen ist vorgesehen, dass ein zu dem Arbeitsraum gerichtetes offenes Ende des Abdeckungstunnel mit einer zugeordneten Öffnung der Abdeckeinrichtung verbunden ist. Bei einigen Ausführungsformen ist vorgesehen, dass ein an der dritten Bewegungseinheit mitfahrend befestigter Abstreifer zum Abstreifen an dem Abdeckungstunnel vorgesehen ist. Beispielsweise ist ein Abstreifer am Schlitten mitfahrend befestigt. Der mitfahrend befestigte Abstreifer verhindert insbesondere, dass Kühlschmierstoffe oder Späne durch den Tunnel in den hinteren Bereich der Maschine gelangen.

Bei einigen Ausführungsformen ist vorgesehen, dass jede Bewegungseinheit einen eigenen computergesteuert unabhängig von den anderen Bewegungseinheiten ansteuerbaren und bewegbaren Antrieb aufweist.

Bei einigen Ausführungsformen ist vorgesehen, dass weiter ein Werkstücktisch vorgesehen ist. Bei einigen Ausführungsformen ist vorgesehen, dass der Werkstücktisch um eine parallel zur ersten Linearachse angeordnete dritte Schwenkachse schwenkbar ist.

Bei einigen Ausführungsformen ist vorgesehen, dass der Werkstücktisch beidseitig schwenkbar gelagert ist.

Bei einigen Ausführungsformen ist vorgesehen, dass der Werkstücktisch wahlweise einseitig oder beidseitig antreibbar ist.

Bei einigen Ausführungsformen ist vorgesehen, dass der Werkstücktisch in Richtung parallel zur dritten Linearachse verschiebbar ist.

Bei einigen Ausführungsformen ist vorgesehen, dass der Werkstücktisch zum Einspannen eines Werkstücks zur gleichzeitigen Bearbeitung durch die erste und die zweite Bearbeitungseinheit eingerichtet ist und/oder zum Einspannen eines ersten Werkstücks und eines zweiten Werkstücks derart eingerichtet ist, dass das erste Werkstück durch die erste Bearbeitungseinheit bearbeitbar ist, während das zweite Werkstück durch die zweite Bearbeitungseinheit bearbeitbar ist.

Bei einigen Ausführungsformen ist vorgesehen, dass jeder Bearbeitungseinheit ein Werkzeugmagazin zugeordnet ist, das sternförmig um eine parallel zur dritten Linearachse verlaufende Magazinschwenkachse angeordnete Werkzeuggreifer aufweist, in denen Werkzeuge derart gehalten sind, dass die Achse der Werkzeuge parallel zur dritten Linearachse verläuft, wobei die jeweilige Arbeitsspindel durch Verfahren der Bewegungseinheiten Werkzeuge in das Werkzeugmagazin ablegen kann oder daraus abholen kann.

Einige Ausführungsformen zielen auf eine Verringerung des minimalen Spindelstichs bei horizontal liegender Hauptbearbeitungsrichtung durch eine versetzte Hauptspindel im Schwenkkopf, vorzugsweise in einem beidseitig gelagerten Gabelkopf, ab. Einige Ausführungsformen betreffen Werkzeugmaschinen zur doppelseitigen Bearbeitung von Werkstücken, insbesondere von Gigacasting-Bauteilen.

Die erste bis dritte Linearachse werden im Folgenden auch als X-Achse, Y-Achse und Z-Achse bezeichnet. Bei bevorzugten Ausführungsformen ist die Z-Achse im Wesentlichen horizontal ausgerichtet.

Einige Ausführungsformen betreffen eine Werkzeugmaschine mit wenigstens zwei unabhängig verfahrbaren 5-Achsbearbeitungseinheiten mit horizontal liegender Hauptbearbeitungsrichtung (Z-Achse).

Einige Ausführungsformen betreffen eine Werkzeugmaschine mit wenigstens einer Bearbeitungseinheit in Kreuzschlittenbauweise mit Abdeckungstunnel.

Ein Hauptaugenmerk bevorzugter Ausführungsformen betrifft eine Verringerung des minimalen Spindelstichs bei horizontal liegender Hauptbearbeitungsrichtung durch versetzte Hauptspindel, beispielsweise in einem beidseitig gelagerten Gabelkopf.

Die erste Schwenkachse wird im Folgenden auch als C-Achse bezeichnet, dies ist die Drehachse, auf welcher der gesamte Bearbeitungskopf - z.B. Fräskopf oder Gabelkopf - sitzt. Die zweite Schwenkachse wird im Folgenden auch als A-Achse bezeichnet, die ist die Drehachse zwischen Bearbeitungskopf - z.B. Fräskopf oder Gabelkopf - und Arbeitsspindel. Bei der Literaturstelle [2] handelt es sich um ein zweispindeliges Bearbeitungszentrum zur Bearbeitung von Rotorblättern mit einem symmetrischen Gabelkopf. Dabei sitzt die Arbeitsspindel mittig auf der C-Achse und mittig auf der A-Achse. Wenn die Spindelachse im 90°-Winkel zur Z-Achse steht, ist die Lagerung der A-Achse maßgeblich für den minimalen Abstand der Spindel zum Bauteil und nicht die Geometrie der Spindel selbst. Bei einer zweispindeligen Werkzeugmaschine wäre auch die Lagerung der A-Achse maßgebend für den minimalen Spindelstich, nicht die Spindel an sich.

Mit Ausführungsformen der Erfindung lässt sich der minimale Spindelstich deutlich verringern, was größere Bearbeitungsmöglichkeiten für die Bearbeitung von Werkstücken wie insbesondere Gigacasting-Bauteilen ergibt. Hierzu ist die Arbeitsspindel exzentrisch mit Abstand zu der ersten und zweiten Schwenkachse gelagert.

Bei einigen Ausführungsformen der Erfindung wird ein Gabelkopf für die Anwendung in einer wenigstens zweispindligen Werkzeugmaschine mit horizontaler Hauptbearbeitungsrichtung zur Bearbeitung von Gigacasting-Bauteilen oder anderer großvolumiger Bauteile optimiert.

Einige Ausführungsformen betreffen ein optimiertes zweispindliges Horizontal-Bearbeitungszentrum zur Fünfachs-Bearbeitung von Gigacasting-Bauteilen. Ein in dem Bearbeitungszentrum bei einigen Ausführungsformen verbaute Fräskopf weist eine hohe Steifigkeit und möglichst geringe Störkonturen im Arbeitsraum und an den zu zerspanenden Bauteilen auf.

Insbesondere weisen bei Ausführungsformen der Erfindung die beiden (in fünf Achsen unabhängig verfahrbaren) Spindeln einen möglichst geringen Spindelstich auf.

Bei einigen Ausführungsformen wurde zwischen einem steifen Aufbau des Fräskopfes und einer möglichst geringen Störkontur des Fräskopfes im Arbeitsraum, am Werkstück und zwischen den Spindeln selbst abgewägt. Aufgrund der horizontalen Hauptbearbeitungsrichtung wirkt die Schwerkraft auf den Gabelkopf, weshalb die auskragende Länge des gesamten Gabelkopfes so gering wie möglich ausgeführt werden sollte.

Einige Ausführungsformen weisen einen Gabelkopf als Schwenkkopf auf. Ein Gabelkopf hat gegenüber Schwenkköpfen mit einseitiger Lagerung eine höhere Stabilität und eine höhere Steifigkeit.

Einige Ausführungsformen weisen einen symmetrisch aufgebauten Gabelkopf auf. Dadurch können bei mehreren Bearbeitungseinheiten gleiche Bauteile/Baugruppen verwendet werden. Es werden eine asymmetrische Steifigkeit und die dadurch bedingte Tendenz, dass das Werkzeug beim Nutfräsen in eine Richtung weggedrückt wird, sowie eine thermische Asymmetrie vermieden. Ein symmetrischer Gabelkopf hat auch Vorteile hinsichtlich der Verringerung des minimalen Spindelstichs.

Einige Ausführungsformen der Erfindung befassen sich mit der Entwicklung und Optimierung eines Fräskopfes für ein zweispindeliges Bearbeitungszentrum mit horizontaler Hauptbearbeitungsrichtung. Zur Reduzierung des minimalen Spindelstichs, des Einflusses der Schwerkraft und der Störkonturen im Arbeitsraum wird die Spindel mit einem Versatz E auf der A-Achse des Gabelkopfes positioniert. Bei einigen Ausführungsformen wird aufgrund der hohen und symmetrischen Steifigkeit und der thermischen Symmetrie der Fräskopf vorzugsweise als Gabelkopf ausgeführt.

Einige Vorteile des vorzugsweisen Aufbaus des Schwenkkopfes/Bearbeitungskopfes, z.B. Fräskopfes, als symmetrischer Gabelkopf sind:
- symmetrische Steifigkeit,
- thermische Symmetrie
- wenn die Spindel im 90°-Winkel zur Z-Achse steht, ist ausschließlich die Spindel maßgeblich für den minimalen Abstand der Spindel zum Bauteil und nicht die Geometrie der Spindel selbst

Ein baugleicher Gabelkopf kann in mehreren Bearbeitungseinheiten in der Werkzeugmaschine verbaut werden. Dies vereinfacht die Montage und erhöht die Einzelteil-Stückzahlen.

Ausführungsbeispiele werden im Folgenden anhand der beigefügten Zeichnungen näher erläutert. Darin zeigt:
- Fig. 1: eine perspektivische Ansicht einer Werkzeugmaschine gemäß einer ersten Ausführungsform, wobei die Werkzeugmaschine eine erste Bearbeitungseinheit und eine zweite Bearbeitungseinheit aufweist;
- Fig. 2: eine Vorderansicht der Werkzeugmaschine von Fig. 1;
- Fig. 3: eine perspektivische Ansicht einer Werkzeugmaschine gemäß einer zweiten Ausführungsform, wobei die Werkzeugmaschine nur eine erste (und einzige) Bearbeitungseinheit aufweist;
- Fig. 4: eine perspektivische Ansicht eines Bearbeitungskopfes der Bearbeitungseinheiten der Werkzeugmaschinen von Fig. 1 bis 3;
- Fig. 5: eine Draufsicht auf Bearbeitungsköpfe der ersten und zweiten Bearbeitungseinheit der Werkzeugmaschine von Fig. 1 und 2;
- Fig. 6: eine Draufsicht auf den Bearbeitungskopf in einer 90°-Winkelstellung mit einer Störkontur;
- Fig. 7: eine Seitenansicht einer dritten Bewegungseinheit der jeweiligen Bearbeitungseinheit mit dem Bearbeitungskopf in einer ausgefahrenen Stellung;
- Fig. 8: eine perspektivische Ansicht einer Anordnung aus einer zweiten Bewegungseinheit, der dritten Bewegungseinheit und des Bearbeitungskopfes einer der Bearbeitungseinheiten in einer ausgefahrenen Stellung;
- Fig. 9: eine Ansicht wie in Fig. 9, wobei der Bearbeitungskopf und die dritten Bewegungseinheit in einer eingefahrenen Stellung sind;
- Fig. 10: eine teils ausgeblendete Seitenansicht der Anordnung aus zweiter und dritter Bewegungseinheit und Bearbeitungskopf, wobei eine dritte Linearführung in der ausgefahrenen Stellung gezeigt ist;
- Fig. 11: die Seitenansicht wie in Fig. 10 in der eingefahrenen Stellung;
- Fig. 12: eine perspektivische Ansicht der Anordnung aus zweiter und dritter Bewegungseinheit mit Bearbeitungskopf, der in der eingefahrenen Stellung in einen Abdecktunnel eingefahren ist;
- Fig. 13: die Ansicht wie in Fig. 12, wobei der Bearbeitungskopf in der ausgefahrenen Stellung gezeigt ist;
- Fig. 14: eine perspektivische Ansicht wie in Fig. 12, wobei einige Komponenten ausgeblendet sind, um die Anordnung und den Zustand der dritten Linearführung in der eingefahrenen Stellung zu verdeutlichen; und
- Fig. 15: eine Ansicht wie in Fig. 14 in der ausgefahrenen Stellung, um die Anordnung und den Zustand der dritten Linearführung in der ausgefahrenen Stellung zu verdeutlichen.

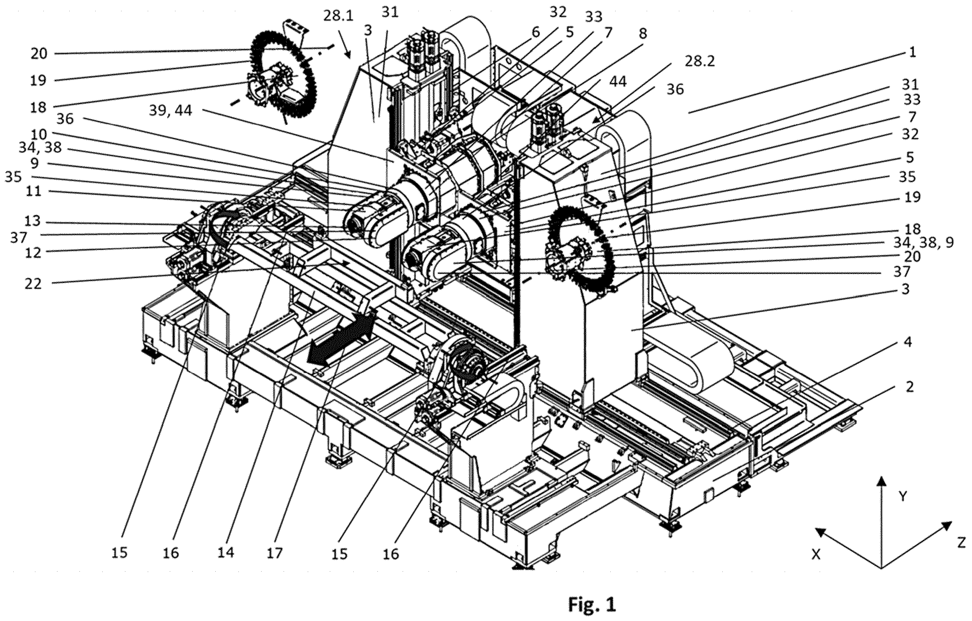

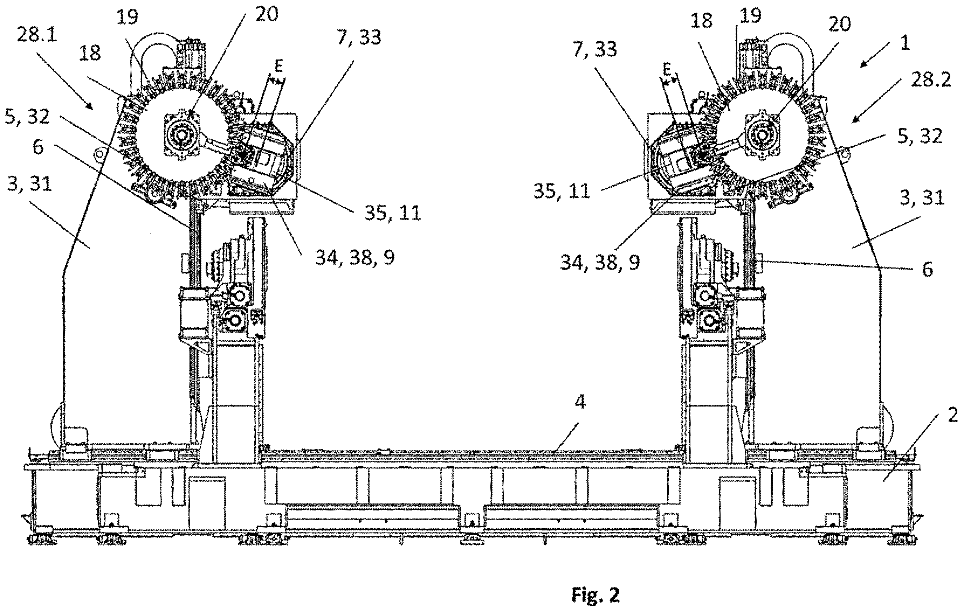

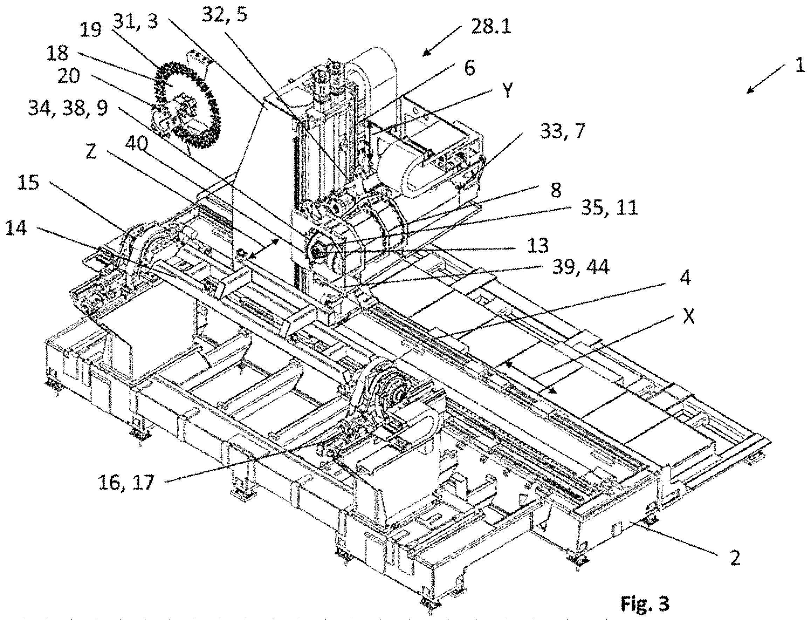

In Fig. 1 und 2 sind unterschiedliche Darstellungen einer Werkzeugmaschine 1 gemäß einer ersten Ausführungsform dargestellt. Fig. 3 zeigt die Werkzeugmaschine 1 gemäß einer zweiten Ausführungsform.

Bei beiden gezeigten Ausführungsformen ist die Werkzeugmaschine 1 mit einem Grundgestell 2 mit einer ersten Linearführung 4 und wenigstens einer ersten Bearbeitungseinheit 28.1 versehen. Bei der Ausführung von Fig. 3 ist nur eine Bearbeitungseinheit 28.1 vorgesehen, mit anderen Worten ist die erste Bearbeitungseinheit 28.1 die einzige Bearbeitungseinheit. Bei der in Fig. 1 und 2 gezeigten Ausführung weist die Werkzeugmaschine 1 wenigstens die erste Bearbeitungseinheit 28.1 und noch eine zweite Bearbeitungseinheit 28.2 auf.

Der Aufbau der jeweiligen Bearbeitungseinheiten 28.1, 28.2 ist im Wesentlichen gleich. Bei der Ausführung der Fig. 1 und 2 sind die Bearbeitungseinheiten 28.1, 28.2 spiegelsymmetrisch ausgeführt. Der Aufbau der Bearbeitungseinheiten 28.1, 28.2 wird daher im Folgenden am Beispiel einer der Bearbeitungseinheiten 28.1, 28.2 beschrieben.

Die wenigstens eine Bearbeitungseinheit 28.1, 28.2 ist entlang der ersten Linearführung 4 an dem Grundgestell 2 in Richtung einer ersten Linearachse X bewegbar.

Jede Bearbeitungseinheit 28.1, 28.2 weist folgende unabhängig voneinander computergesteuert bewegbare Bewegungseinheiten 31, 32, 33, 34, 35 auf:
eine erste Bewegungseinheit 31 mit einer zweiten Linearführung 6, welche erste Bewegungseinheit 31 mittels der ersten Linearführung 4 an dem Grundgestell 2 in Richtung der ersten Linearachse X bewegbar ist,
eine zweite Bewegungseinheit 32 mit einer dritten Linearführung 8, welche zweite Bewegungseinheit 32 an der zweiten Linearführung 6 in Richtung einer quer zu der ersten Linearachse X verlaufenden zweiten Linearachse Y bewegbar ist,
eine dritte Bewegungseinheit 33 mit einem ersten Schwenklager 36, welche dritte Bewegungseinheit 33 an der dritten Linearführung 8 in Richtung einer quer zu der ersten Linearachse X und quer zu der zweiten Linearachse Y im Wesentlichen horizontal verlaufenden dritten Linearachse Z bewegbar ist,
eine vierte Bewegungseinheit 34 mit einem Schwenkkopf 38, welche vierte Bewegungseinheit 34 mittels des ersten Schwenklagers 36 an der dritten Bewegungseinheit 33 um eine erste Schwenkachse 10 schwenkbar ist, und
eine fünfte Bewegungseinheit 35, die mittels wenigstens einen zweiten Schwenklagers 37 an dem Schwenkkopf 38 um eine sich quer zu der ersten Schwenkachse 10 erstreckende zweite Schwenkachse 12 schwenkbar ist, wobei eine Arbeitsspindel 13 um eine Spindelachse 24 drehbar an der fünften Bewegungseinheit 35 angeordnet ist.

Die Arbeitsspindel 13 ist exzentrisch mit Abstand E zu der ersten und zweiten Schwenkachse 10, 12 an der fünften Bewegungseinheit 35 gelagert.

Wie oben bereits erwähnt, hat die Werkzeugmaschine 1 gemäß der in Fig. 1 und 2 gezeigten ersten Ausführungsform eine zweite Bearbeitungseinheit 28.2, wobei die erste Bearbeitungseinheit 28.1 und die zweite Bearbeitungseinheit 28.2 unabhängig voneinander entlang der ersten Linearführung 4 an dem Grundgestell 2 in Richtung der ersten Linearachse X bewegbar sind, Dabei weist jede der ersten und zweiten Bearbeitungseinheit 28.1, 28.2 die erste bis fünfte Bewegungseinheit 31-35 auf, die unabhängig voneinander computergesteuert bewegbar sind.

Vorzugsweise sind die Arbeitsspindeln 13 jeder der ersten und zweiten Bearbeitungseinheit 28.1, 28.2 exzentrisch mit Abstand zu der ersten und zweiten Schwenkachse 10 ,12 an der jeweiligen fünften Bewegungseinheit 35 gelagert.

Der Schwenkkopf 38 kann unterschiedlich ausgebildet sein, nicht dargestellte Ausführungen weisen nur ein zweites Schwenklager 37 zur einseitigen Lagerung der fünften Bewegungseinheit 35 auf.

Vorzugsweise ist der Schwenkkopf 38 der vierten Bewegungseinheit 34 wie bei den in den Figuren dargestellten Ausführungsformen gezeigt, ein Gabelkopf 9, der die fünfte Bewegungseinheit 35 umgreift, wobei die fünfte Bewegungseinheit 35 mittels zweier zweiter Schwenklager 37 an dem Gabelkopf 9 auf gegenüberliegenden Seiten um die sich quer zu der ersten Schwenkachse 10 erstreckende zweite Schwenkachse 12 schwenkbar ist.

Bei den dargestellten Ausführungsformen weist die jeweilige erste Bewegungseinheit 31 einen Ständer 3 auf, die zweite Bewegungseinheit 32 weist einen Kreuzschlitten 5 auf, die dritte Bewegungseinheit 33 weist einen Schlitten 7 auf und die fünfte Bewegungseinheit 35 weist einen Spindelkasten 11.

Im Folgenden wird ein beispielhafter Aufbau der Werkzeugmaschine 1 sowie der Bearbeitungseinheit(en) 28.1, 28.2 am Beispiel der Fig. 1 und 2 näher erläutert.

Die Werkzeugmaschine 1 besitzt das Grundgestell 2, auf dem sich zwei Ständer 3 auf einer gemeinsamen Führung - erste Linearführung 4 - horizontal in X-Richtung bewegen können. Beide Ständer 3 sind separat angetrieben und können unabhängig voneinander bewegt werden.

An jedem der beiden Ständer 3 kann sich ein Kreuzschlitten 5 an einer rechtwinklig zur X-Achse stehenden Führung - zweite Linearführung 6 - in vertikaler Richtung - Y-Richtung - bewegen. Beide Kreuzschlitten 5 sind separat angetrieben und können unabhängig voneinander bewegt werden.

Auf jedem Kreuzschlitten 5 kann sich wiederum ein Schlitten 7 mittels einer rechtwinklig zur X- und Y-Achse angeordneten Führung - dritte Linearführung 8- in horizontaler Richtung bewegen, der Z-Richtung. Beide Schlitten 7 sind separat angetrieben und können unabhängig voneinander bewegt werden.

Auf jedem der beiden Schlitten 7 ist ein schwenkbar gelagerter Gabelkopf 9 befestigt, beide können sich durch separate Antriebe unabhängig voneinander parallel zur Z-Achse um eine erste Schwenkachse 10 drehen, diese als wird als C-Achse 10 bezeichnet.

In jedem der beiden Gabelköpfe 9 befindet sich ein schwenkbar um eine zweite Schwenkachse 12 gelagerter Spindelkasten 11. Die zweite Schwenkachse 12 ist rechtwinklig zur ersten Schwenkachse 10 und wird als A-Achse bezeichnet. Beide Gabelköpfe 9 können sich durch separate Antriebe unabhängig voneinander drehen. In jedem der beiden Spindelkästen 11 befindet sich eine Arbeitsspindel 13, die sich somit unabhängig in allen Raumrichtungen bewegen lässt.

Die Werkzeugmaschine 1 hat einen Werkstücktisch 14, der um eine dritte Schwenkachse 15 schwenkbar gelagert ist. Die dritte Schwenkachse 15, weiter als AW-Achse bezeichnet, ist parallel zur X-Achse angeordnet und kann sowohl nur einseitig als auch beidseitig angetrieben werden. Die beiden Lagerungen der Werkstückschwenkachse - dritte Schwenkachse 15 - können sich auf Führungen - vierte Linearführung 16 - in Richtung einer vierten Linearachse 17 parallel zur Z-Achse horizontal bewegen. Die vierte Linearachse wird weiter als W-Achse bezeichnet. Die Führungen der vierten Linearführung 16 sind wiederum am Grundgestell 2 befestigt.

Auf dem Werkstücktisch 14 kann entweder ein Werkstück von beiden Arbeitsspindeln 13 gleichzeitig bearbeitet werden, oder zwei Werkstücke werden von jeweils einer Arbeitsspindel 13 bearbeitet.

Links und rechts zwischen den Ständern 3 und dem Werkstücktisch 14 sind Werkzeugmagazine 18 angeordnet. Werkzeuggreifer 19 der Werkzeugmagazine 18 sind sternförmig um eine parallel zur Z-Achse verlaufenden vierten Schwenkachse 20, der Q-Achse schwenkbar gelagert. Die Achse der sich in den Werkzeuggreifern 19 befindenden Werkzeuge verläuft parallel zur Z-Achse. Die Arbeitsspindel 13 kann durch Verfahren der fünf Achsen X, Y, Z, A und C Werkzeuge in das Werkzeugmagazin 18 ablegen oder abholen.

Somit hat die Werkzeugmaschine 1 gemäß der ersten Ausführungsform zwei, in jeweils 5 Achsen völlig unabhängig bewegbare werkzeugtragende Baugruppen, wobei die Hauptbearbeitungsrichtung (Z-Achse) horizontal angeordnet ist.

Die Arbeitsinhalte der beiden unabhängig voneinander agierenden Arbeitsspindeln 13 können unterschiedlich sein und ermöglichen so eine gleichzeitige Bearbeitung eines nicht symmetrischen Bauteils oder zweier unterschiedlicher Bauteile.

Die horizontale Anordnung der Hauptbearbeitungsrichtung (Z-Achse) ermöglicht einen guten Spänefall nach unten, was besonders in der Großserienfertigung von Vorteil ist.

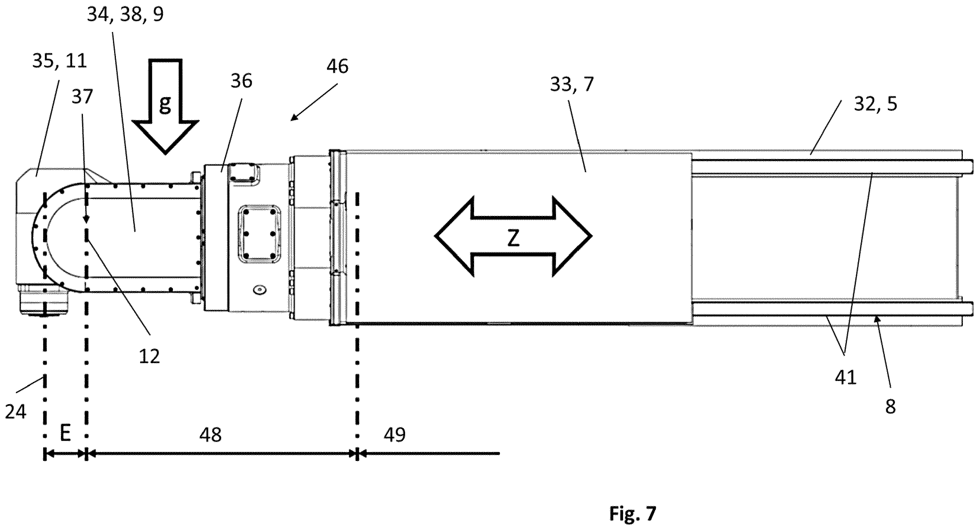

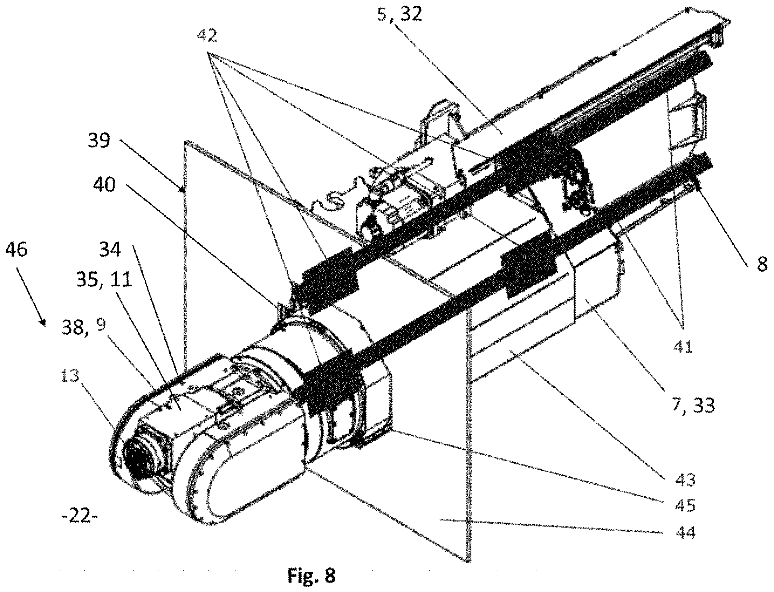

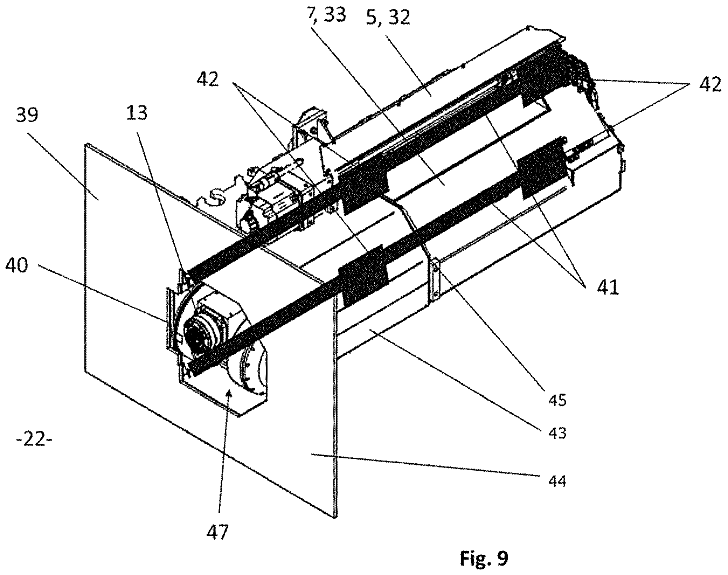

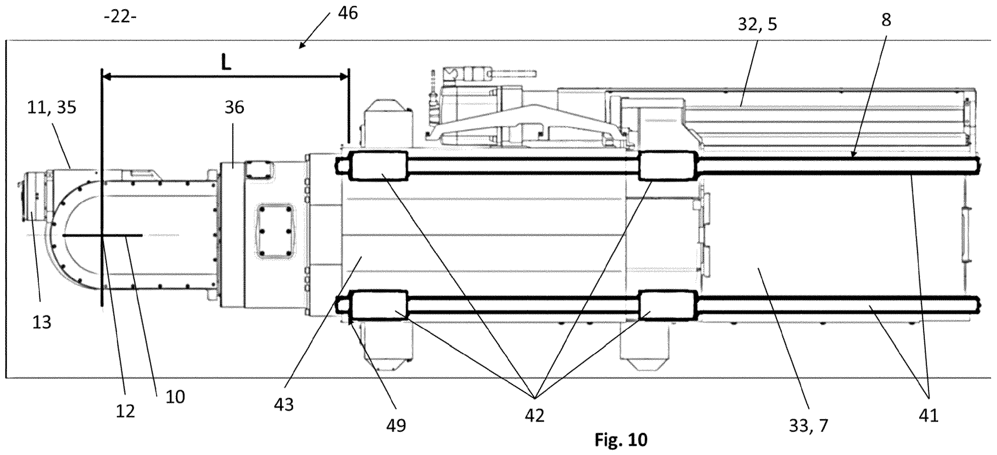

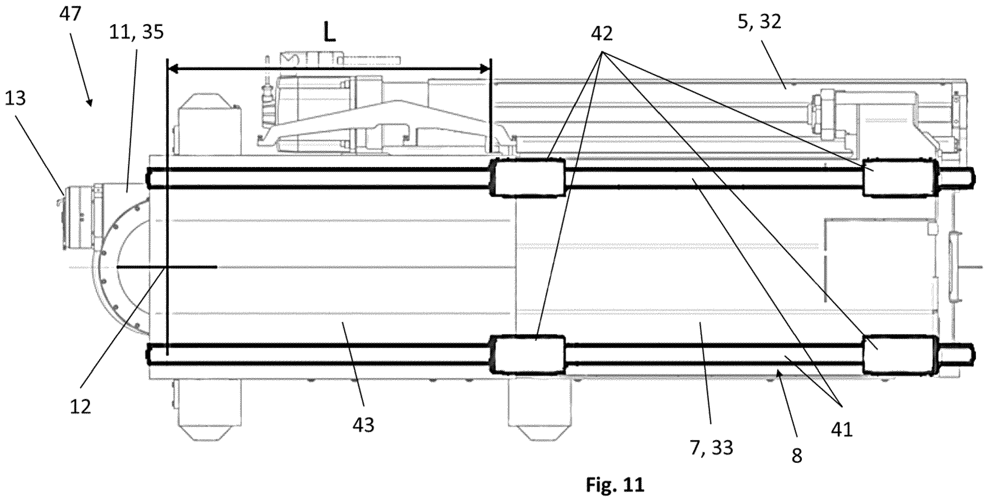

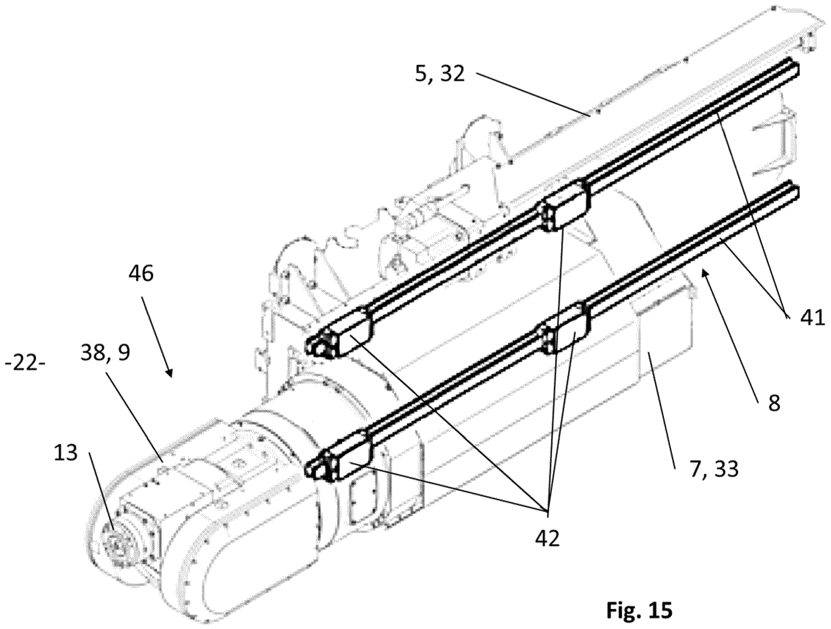

Die Werkzeugmaschine 1 hat weiter eine sich quer zur dritten Linearachse Z in X- und Y-Richtung erstreckende Abdeckungseinrichtung 39 zum Abtrennen eines Arbeitsraumes 22 von den Linearführungen 4, 6, 8. Die Abdeckungseinrichtung 39 ist mit wenigstens einer Öffnung 40 für die jeweilige fünfte Bewegungseinheit 35 versehen. Die jeweilige Öffnung 40 ist mittels der zweiten Bewegungseinheit 32 in Richtung der ersten und der zweiten Linearachse X, Y bewegbar. Wie später noch anhand der Fig. 7 bis 15 erläutert werden wird, ist die fünfte Bewegungseinheit 35 durch Bewegung der dritten Bewegungseinheit 33 in Richtung der dritten Linearachse Z zwischen einer vorgeschobenen Position 46, in der die fünfte Bewegungseinheit 35 in dem Arbeitsraum 22 angeordnet ist, und einer zurückgezogenen Position 47, in der die fünfte Bewegungseinheit 35 im Wesentlich hinter der Abdeckungseinrichtung 39 angeordnet ist, bewegbar.

Die Abdeckungseinrichtung 39 weist eine mit der zweiten Bewegungseinheit 32 der ersten Bearbeitungseinheit 28.1 in Richtung der ersten und zweiten Linearachse X, Y mitbewegbare erste Abdeckung 44 mit einer ersten Öffnung 40 und eine mit der zweiten Bewegungseinheit 32 der zweiten Bearbeitungseinheit 28.2 in Richtung der ersten und zweiten Linearachse X, Y mitbewegbare zweite Abdeckung 44 mit einer zweiten Öffnung 40 auf. Mit der jeweiligen Öffnung 40 ist jeweils ein Abdecktunnel 43 verbunden, der ebenfalls hiernach noch näher erläutert wird.

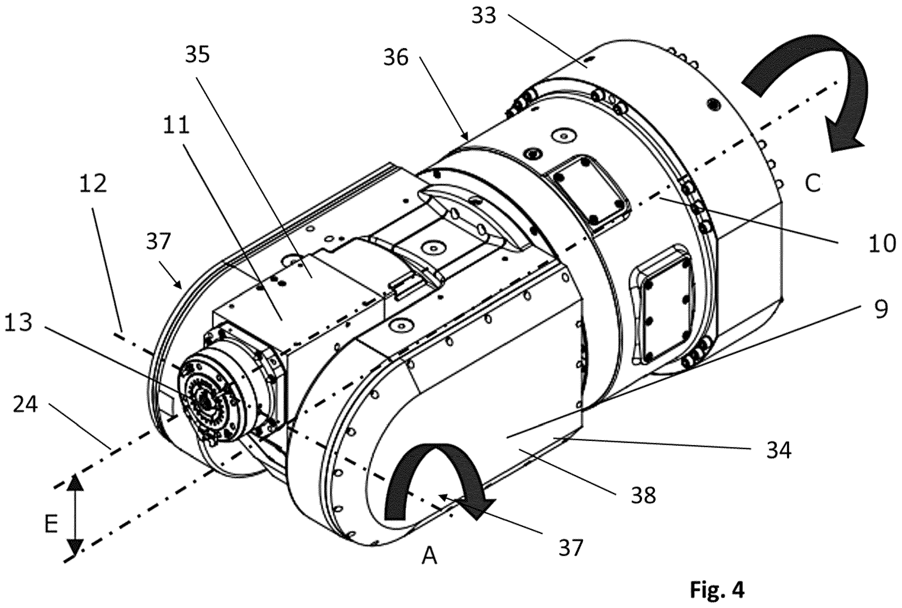

Im Folgenden wird die bei den Ausführungen gemäß der Erfindung realisierte Verringerung des minimalen Spindelstichs anhand der Darstellung in den Fig. 3 bis 6 näher erläutert.

Die zweite Schwenkachse 12 - A-Achse, Schwenkachse des Spindelkastens 11 - ist rechtwinklig zu der ersten Schwenkachse 10 - C-Achse, Schwenkachse des Gabelkopfes 9 - angeordnet, beide Achsen 12, 10, A, C schneiden sich in einem gemeinsamen Punkt. Die Spindelachse 24 der Arbeitsspindel 13 ist im Spindelkasten 11 um den Abstand E versetzt zu den Schwenkachsen A und C angeordnet, was folgende Vorteile bietet:
- Bei zwei Arbeitsspindeln 13 kann das Abstandsmaß S1 der beiden Arbeitsspindeln 13 zueinander durch Schwenken der C-Achse reduziert werden und ist somit kleiner als das Abstandsmaß S2 der beiden C-Achsen.
- Bei Bearbeitungen, bei denen die Spindelachse 24 der Arbeitsspindel 13 rechtwinklig zur C-Achse steht, ermöglicht der Abstand E eine bessere Erreichbarkeit der Werkstücke bei gleichem Z-Hub.
- Durch den Abstand E ist der Spindelkasten 11 die maßgebende Kontur beim Anfahren an eine Störkontur 26, nicht der Gabelkopf 6, wodurch die erreichbaren Bearbeitungen näher an etwaigen Störkonturen 26 liegen können.

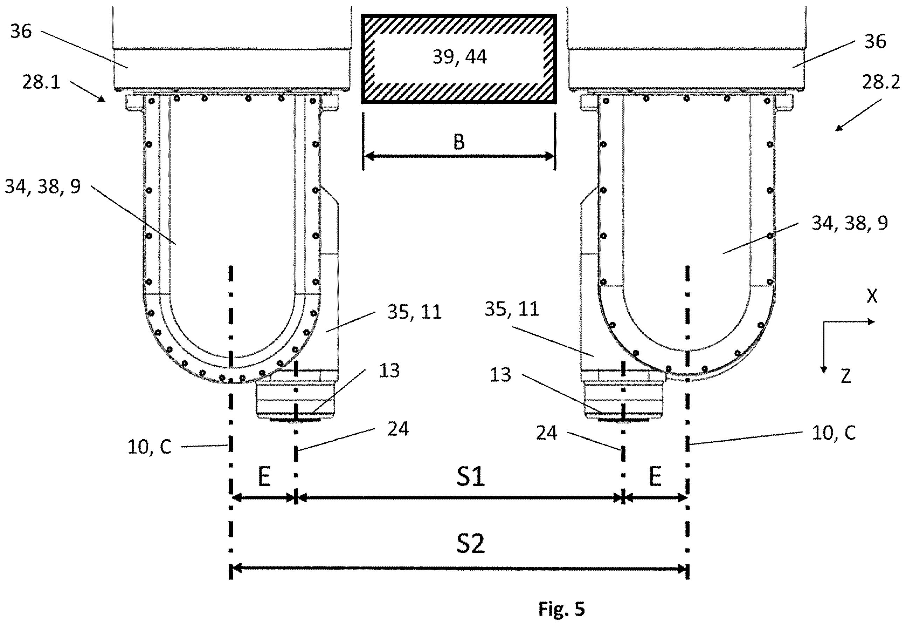

Gemäß Fig. 5 kann durch den Aufbau des Gabelkopfes 9 der Stich der C-Achsen S2 durch die Exzentrizität E der Arbeitsspindel 13 auf das Maß S1 (S1 = S2- 2x E) reduziert werden. Dies ist insbesondere dadurch relevant, dass zwischen den beiden Arbeitsspindeln 13 eine Abdeckung 44 vorgesehen ist, welche das Blockmaß B aufweist. Dieses Blockmaß B ist maßgebend für den minimalen Abstand S2 der C-Achsen.

Durch die Bauweise des Gabelkopfes 9 wird der Arbeitsraum 22 in der X- und Y-Achse jeweils um den Wert 2x E erweitert.

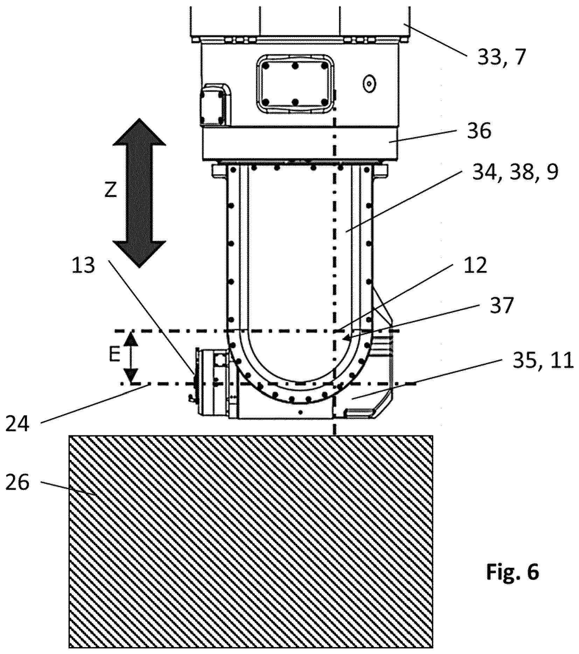

Gemäß Fig. 6 wirkt durch die horizontale Hauptbearbeitungsrichtung Z der Werkzeugmaschine 1 die Schwerkraft g auf die Z-Achsen, auf welchen die Gabelköpfe 9 sitzen. Somit wird das Werkzeug im Gabelkopf 9 durch die Schwerkraft nach unten abgelenkt. Durch den Versatz E der Arbeitsspindel 13 wird die Z-Achse in den Arbeitsraum 22 verlängert, ohne dass die Auskragung der A-Achse vergrößert wird. Das Bezugszeichen 49 bezeichnet das Ende der dritten Linearführung 8, d.h. der Führung in Richtung der Z-Achse.

Gemäß Fig. 2 wird darüber hinaus durch den Versatz E der Arbeitsspindel 13 der erforderliche Überhub in den X- und Y-Achsen für den Werkzeugwechsel reduziert.

Durch den geringeren Überhub kann der Ständer 3 breiter in X-Richtung gebaut werden, ohne den Footprint der Werkzeugmaschine 1 zu erhöhen. Alternativ könnte auch das Maschinenbett - Grundgestell 2 - in X-Richtung schmäler gebaut werden. Zudem kann der Ständer 3 durch die Exzentrizität E der Spindel 13 in Y-Richtung niedriger gebaut werden.

Im Folgenden wird anhand der Fig. 7 bis 15 der Aufbau der Bearbeitungseinheit 28.1, 28.2 in Kreuzschlittenbauweise mit Abdeckungstunnel 43 näher erläutert.

Führungsschienen 41 der Z-Achse - d.h. die der dritten Linearführung 8 - sind auf dem, in Y-Richtung beweglichen Kreuzschlitten 5 befestigt und Führungswagen 42 der Z-Achse (Beispiel für Führungselemente der dritten Linearführung 8) sind auf dem Schlitten 7 befestigt.

Der Gabelkopf 9 mit Arbeitsspindel 13, A- und C-Achse ragen in vorderer Z-Hublage - vorgeschobene Position 46 - über die das Ende 49 der Führungen der dritten Linearführung 8 nach vorne in den Arbeitsraum 22. Beim Verfahren in die hintere Z-Position - zurückgezogene Position 47 - taucht der Gabelkopf 9 in den Abdeckungstunnel 43, der vorne mit der sich in X- und Y-Richtung erstreckenden Abdeckung 44 verbunden ist.

Die Abdeckung 44 und der Abdeckungstunnel 43 trennen den Arbeitsraum 22 vom hinteren Raum der Werkzeugmaschine 1. Ein am Schlitten 7 mitfahrend befestigter Abstreifer 45 verhindert, dass Kühlschmierstoffe oder Späne durch den Abdeckungstunnel 43 in den hinteren Bereich der Werkzeugmaschine 1 gelangen.

Die A- und die C-Achse können sich auch im Abdeckungstunnel 43 bewegen.

Dieser mechanische Aufbau ermöglicht es, die in XY-Ebene verlaufende Abdeckung 44, sowie den Ständer 3 mit den X- und Y-Führungen - erste Linearführung 4 und zweite Linearführung 6 - möglichst nahe an dem zu bearbeitenden Werkstück zu positionieren, was folgende Vorteile bietet:
- Geringere Auskragung 48 der Arbeitsspindel 13 zur X- und Y-Führung 4, 6, was sich wiederum positiv auf die Steifigkeit der Bearbeitungsmaschine auswirkt.
- Kleineres Arbeitsraumvolumen, was Vorteile bei der Späneabfuhr und der Absaugung mit sich bringt.

Durch das Zurückziehen des beispielsweise als Fräskopf ausgebildeten Bearbeitungskopfes in den Abdeckungstunnel 43 ist ein freies Drehen des Werkstücktisches 14 um die W-Achse möglich. Zudem können zeitgleich auch die Achsen X und Y frei verfahren werden.

Die Bauweise mit Kreuzschlitten 5 und Abdecktunnel 43 hat einige wesentliche Vorteile im Vergleich zur sogenannten Pinolen-Bauweise:
- Die Maschine kann kompakter gebaut werden, da die Abdeckungen der X- und Y-Achsen näher an dem zu bearbeitenden Werkstück liegen können.
- Das Werkstück kann im Arbeitsraum 22 freier geschwenkt werden, da die Spindel 13 in den Tunnel 43 zurückgezogen werden kann und keine Störkontur im Arbeitsraum 22 bildet.
- Durch die kompakte Anordnung der Abdeckungen 44 kann das Arbeitsraumvolumen reduziert werden, was sich positiv auf die Späneabfuhr und die Absaugung auswirkt.
- Die Kreuzschlitten-Bauweise hat zudem den Vorteil, dass die Arbeitsspindel 13 eine möglichst geringe Auskragung 48 zur X- und Y-Führung des Fahrständers 3 aufweist, was sich positiv auf die Steifigkeit der Bearbeitungsmaschine auswirkt. Zudem hat der Drehpunkt der A-Achse einen gleichbleibenden Abstand L in Z-Richtung zu den Führungswagen 42 der Z-Achse, wodurch die Steifigkeit über den Hub konstanter ist.

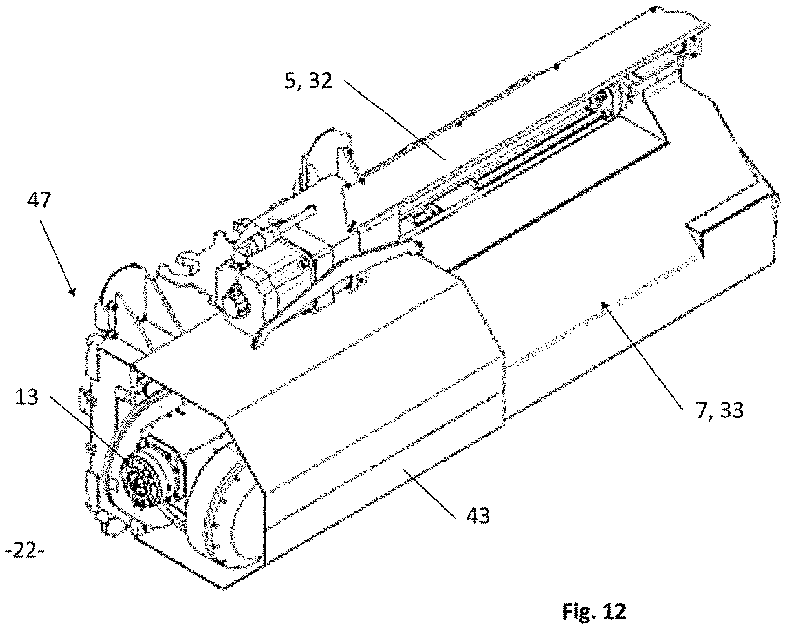

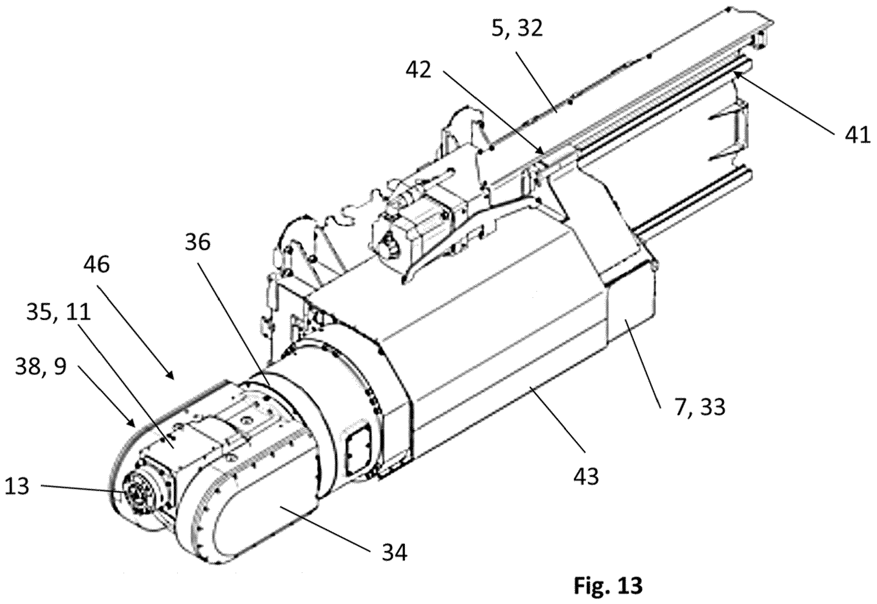

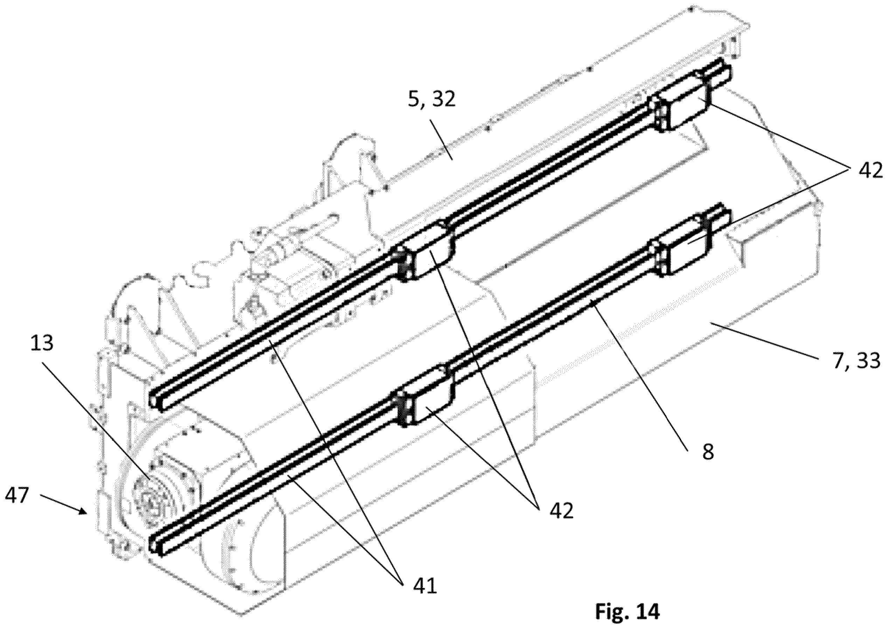

Die Fig. 12 zeigt die Stellung der Z-Achse - dritte Bewegungseinheit 33 - in der hinteren Endlage 47. Die Fig. 13 zeigt die Stellung der Z-Achse - dritte Bewegungseinheit 33 - in der vorderen Endlage 47. Die Führungsschienen 41 und Führungswagen 42 der dritten Linearführung 8 - Z-Führung - sind in Fig. 14 in der hinteren Endlage 47 und in Fig. 16 in der vorderen Endlage 48 gezeigt.

Die Tunnel-Bauweise der Werkzeugmaschinen 1 gemäß den gezeigten Ausführungen zeichnet sich dadurch aus, dass die Abdeckungsbleche des Abdecktunnels 43 fest mit dem Kreuzschlitten 5 verschraubt sind.

Zudem liegen die Bewegungen des Werkzeugs bei der Werkzeugmaschine 1 gemäß den gezeigten Ausführungen in allen fünf Achsrichtungen, zwischen der Spindel 13 und dem Z-Schlitten 7 liegen mit der A- und C-Achse noch zwei Schwenkachsen 10, 12.

Die Erfindung betrifft eine vorzugsweise als horizontales Bearbeitungszentrum ausgebildete ein- oder bevorzugt mehrspindelige Werkzeugmaschine 1 mit wenigstens einer Fünf-Achs-Bearbeitungseinheit 28.1, mittels der wenigstens eine Arbeitsspindel in drei Linearachsen X, Y, Z und zwei Schwenkachsen 36, 37 bewegbar ist. Um die Werkzeugmaschine 1 zur Bearbeitung von insbesondere großvolumigen Werkstücken zu optimieren, wird vorgeschlagen, dass die Arbeitsspindel 13 exzentrisch mit Abstand (E) zu der ersten und zweiten Schwenkachse 36, 37 gelagert ist.

### Bezugszeichenliste:

- 1: Werkzeugmaschine
- 2: Grundgestell
- 3: Ständer
- 4: erste Linearführung
- 5: Kreuzschlitten
- 6: zweite Linearführung
- 7: Schlitten
- 8: dritte Linearführung
- 9: Gabelkopf
- 10: erste Schwenkachse - C-Achse
- 11: Spindelkasten
- 12: zweite Schwenkachse - A-Achse
- 13: Arbeitsspindel
- 14: Werkstücktisch
- 15: dritte Schwenkachse
- 16: vierte Linearführung
- 17: vierte Linearachse - W-Achse
- 18: Werkzeugmagazin
- 19: Werkzeuggreifer
- 20: vierte Schwenkachse - Q-Achse/Magazinschwenkachse
- 22: Arbeitsraum
- 24: Spindelachse
- 26: Störkontur
- 28.1: erste Bearbeitungseinheit
- 28.2: zweite Bearbeitungseinheit
- 31: erste Bewegungseinheit
- 32: zweite Bewegungseinheit
- 33: dritte Bewegungseinheit
- 34: vierte Bewegungseinheit
- 35: fünfte Bewegungseinheit
- 36: erstes Schwenklager
- 37: zweites Schenklager
- 38: Schwenkkopf
- 39: Abdeckungseinrichtung
- 40: Öffnung
- 41: Führungsschiene Z-Achse (dritte Linearführung)
- 42: Führungswagen Z-Achse (Beispiel für Führungselement)
- 43: Abdeckungstunnel
- 44: Abdeckung
- 45: Abstreifer
- 46: vorgeschobene Position
- 47: zurückgezogene Position
- 48: Auskragung
- 49: Ende Führung Z-Achse
- A: A-Achse, zweite Schwenkachse
- C: C-Achse, erste Schwenkachse
- E: Abstand
- L: Abstand
- S1: Abstandsmaß der Arbeitsspindeln
- S2: Abstandsmaß der C-Achsen
- X: erste Linearachse
- Y: zweite Linearachse
- Z: dritte Linearachse

## Patentansprüche

1. Werkzeugmaschine (1) mit einem Grundgestell (2) mit einer ersten Linearführung (4) und wenigstens einer ersten Bearbeitungseinheit (28.1), die entlang der ersten Linearführung (4) an dem Grundgestell (2) in Richtung einer ersten Linearachse (X) bewegbar ist und folgende unabhängig voneinander computergesteuert bewegbare Bewegungseinheiten (31-35) aufweist:
eine erste Bewegungseinheit (31) mit einer zweiten Linearführung (6), welche erste Bewegungseinheit (31) mittels der ersten Linearführung (4) an dem Grundgestell (2) in Richtung der ersten Linearachse (X) bewegbar ist,
eine zweite Bewegungseinheit (32) mit einer dritten Linearführung (8), welche zweite Bewegungseinheit (32) an der zweiten Linearführung (6) in Richtung einer quer zu der ersten Linearachse (X) verlaufenden zweiten Linearachse (Y) bewegbar ist,
eine dritte Bewegungseinheit (33) mit einem ersten Schwenklager (36), welche dritte Bewegungseinheit (33) an der dritten Linearführung (8) in Richtung einer quer zu der ersten Linearachse (X) und quer zu der zweiten Linearachse (Y) im Wesentlichen horizontal verlaufenden dritten Linearachse (Z) bewegbar ist,
eine vierte Bewegungseinheit (34) mit einem Schwenkkopf (38), welche vierte Bewegungseinheit (34) mittels des ersten Schwenklagers (36) an der dritten Bewegungseinheit (33) um eine erste Schwenkachse (10) schwenkbar ist,
eine fünfte Bewegungseinheit (35), die mittels wenigstens eines zweiten Schwenklagers (37) an dem Schwenkkopf (38) um eine sich quer zu der ersten Schwenkachse (36) erstreckende zweite Schwenkachse (37) schwenkbar ist, wobei eine Arbeitsspindel (13) um eine Spindelachse (24) drehbar an der fünften Bewegungseinheit (35) angeordnet ist,
**dadurch gekennzeichnet,**
**dass** die Arbeitsspindel (13) exzentrisch mit Abstand (E) zu der ersten und zweiten Schwenkachse (10, 37) an der fünften Bewegungseinheit (35) gelagert ist und
**dass** eine sich quer zur dritten Linearachse (Z) erstreckende Abdeckungseinrichtung (39) zum Abtrennen eines Arbeitsraumes (22) von den Linearführungen (4, 6, 8) vorgesehen ist, die mit wenigstens einer Öffnung (40) für die jeweilige fünfte Bewegungseinheit (35) versehen ist, wobei die jeweilige Öffnung (40) mittels der zweiten Bewegungseinheit (32) in Richtung der ersten und der zweiten Linearachse (X, Y) bewegbar ist, wobei die fünfte Bewegungseinheit (35) durch Bewegung der dritten Bewegungseinheit (33) in Richtung der dritten Linearachse (Z) zwischen einer vorgeschobenen Position (46), in der die fünfte Bewegungseinheit (35) in dem Arbeitsraum (22) angeordnet ist, und einer zurückgezogenen Position (47), in der die fünfte Bewegungseinheit (35) im Wesentlich hinter der Abdeckungseinrichtung (39) angeordnet ist, bewegbar ist; und/oder
**dass** an der zweiten Bewegungseinheit (32) ein Abdeckungstunnel (43) befestigt ist, in den die vierte und fünfte Bewegungseinheit (34, 35) durch Bewegung der dritten Bewegungseinheit (33) in eine zurückgezogene Position (47) einfahrbar ist und aus dem die vierte und fünfte Bewegungseinheit (34, 35) durch Bewegung der dritten Bewegungseinheit (33) in den Arbeitsraum (22) hinein fahrbar ist.

2. Werkzeugmaschine (1) nach Anspruch 1, **gekennzeichnet durch** eine zweite Bearbeitungseinheit (28.2), wobei die erste Bearbeitungseinheit (28.1) und die zweite Bearbeitungseinheit (28.2) unabhängig voneinander entlang der ersten Linearführung (4) an dem Grundgestell (2) in Richtung der ersten Linearachse (X) bewegbar sind,
wobei jede der ersten und zweiten Bearbeitungseinheit (28.1, 28.2) die erste bis fünfte Bewegungseinheit (31-35) aufweist, die unabhängig voneinander computergesteuert bewegbar sind,
wobei die Arbeitsspindel (13) jeder der ersten und zweiten Bearbeitungseinheit (28.1, 28.2) exzentrisch mit Abstand (E) zu der ersten und zweiten Schwenkachse (36, 37) an der fünften Bewegungseinheit (35) gelagert ist.

3. Werkzeugmaschine (1) nach Anspruch 2, **dadurch gekennzeichnet,**
**dass** die erste und zweite Bearbeitungseinheit (28.1, 28.2) spiegelsymmetrisch zueinander ausgebildet sind.

4. Werkzeugmaschine (1) nach Anspruch 2 oder 3, **dadurch gekennzeichnet,**
**dass** die Abdeckungseinrichtung (39) eine mit der zweiten Bewegungseinheit (32) der ersten Bearbeitungseinheit (28.1) in Richtung der ersten und zweiten Linearachse (X, Y) mitbewegbare erste Abdeckung (44) mit einer ersten Öffnung (40) und eine mit der zweiten Bewegungseinheit (32) der zweiten Bearbeitungseinheit (28.2) in Richtung der ersten und zweiten Linearachse (X, Y) mitbewegbare zweite Abdeckung (44) mit einer zweiten Öffnung (40) aufweist.

5. Werkzeugmaschine (1) nach einem der voranstehenden Ansprüche, **dadurch gekennzeichnet,**
**dass** der Schwenkkopf (38) der vierten Bewegungseinheit (34) ein Gabelkopf (9) ist, der die fünfte Bewegungseinheit (35) umgreift, wobei die fünfte Bewegungseinheit (35) mittels zweiter Schwenklager (37) an dem Gabelkopf (9) auf gegenüberliegenden Seiten um die sich quer zu der ersten Schwenkachse (36) erstreckende zweite Schwenkachse (37) schwenkbar ist.

6. Werkzeugmaschine (1) nach einem der voranstehenden Ansprüche, **dadurch gekennzeichnet**,
6.1 dass die erste und zweite Schwenkachse (36, 37) in einer Ebene liegen und die Arbeitsspindel (13) mit einem Abstand (E) zu der Ebene gelagert ist und/oder
6.2 dass die Arbeitsspindel (13) derart exzentrisch gelagert ist, dass die Kontur eines Spindelkastens (11) zum Lagern der Arbeitsspindel (13) quer zur Spindelachse (24) über den Gabelkopf (9) hervorsteht und so die Außenkontur eines aus der vierten und fünften Bewegungseinheit (34, 35) gebildeten Bearbeitungskopfes bildet.

7. Werkzeugmaschine (1) nach einem der voranstehenden Ansprüche, **dadurch gekennzeichnet**,
7.1 dass die erste Linearachse (X) im Wesentlichen horizontal verläuft und/oder
7.2 dass die zweite Linearachse (Y) senkrecht zur ersten Linearachse (X) und/oder im Wesentlichen vertikal verläuft und/oder
7.3 dass die dritte Linearachse (Z) und/oder die erste Schwenkachse (36) senkrecht zur ersten und zweiten Linearachse (X, Y) verläuft und/oder
7.4 dass die erste Schwenkachse (36) parallel zu der dritten Linearachse (Z) und/oder im Wesentlichen horizontal verläuft und/oder
7.5 dass die zweite Schwenkachse (37) senkrecht zu der ersten Schwenkachse (36) verläuft und/oder die erste Schwenkachse (36) in einem Kreuzungspunkt schneidet.

8. Werkzeugmaschine (1) nach einem der voranstehenden Ansprüche, **dadurch gekennzeichnet**,
8.1 dass die erste Bewegungseinheit (31) einen Ständer (3) aufweist und/oder
8.2 dass die zweite Bewegungseinheit (32) einen Kreuzschlitten (5) aufweist und/oder
8.3 dass die dritte Bewegungseinheit (33) einen Schlitten (5) aufweist und/oder
8.4 dass die fünfte Bewegungseinheit (35) einen Spindelkasten (11) aufweist.

9. Werkzeugmaschine (1) nach einem der voranstehenden Ansprüche, **dadurch gekennzeichnet,**
**dass** die dritte Linearführung (8) Führungsschienen (41) an der zweiten Bewegungseinheit (32) aufweist und dass die dritte Bewegungseinheit (32) an den Führungsschienen (41) der dritten Linearführung (8) bewegbar geführte Führungselemente (42) aufweist.

10. Werkzeugmaschine (1) nach einem der voranstehenden Ansprüche, **dadurch gekennzeichnet,**
**dass** ein zu dem Arbeitsraum (22) gerichtetes offenes Ende des Abdeckungstunnels (43) mit einer zugeordneten Öffnung (40) der Abdeckeinrichtung (39) verbunden ist.

11. Werkzeugmaschine (1) nach einem der voranstehenden Ansprüche, **dadurch gekennzeichnet,**
**dass** ein an der dritten Bewegungseinheit (33) mitfahrend befestigter Abstreifer (45) zum Abstreifen an dem Abdeckungstunnel (43) vorgesehen ist.

12. Werkzeugmaschine (1) nach einem der voranstehenden Ansprüche, **dadurch gekennzeichnet,**
**dass** jede Bewegungseinheit (31-35) einen eigenen computergesteuert unabhängig von den anderen Bewegungseinheiten ansteuerbaren und bewegbaren Antrieb aufweist.

13. Werkzeugmaschine (1) nach einem der voranstehenden Ansprüche, **dadurch gekennzeichnet,**
**dass** weiter ein Werkstücktisch (14) vorgesehen ist, der
13.1 um eine parallel zur ersten Linearachse (X) angeordnete dritte Schwenkachse (15) schwenkbar ist und/oder
13.2 beidseitig schwenkbar gelagert ist und/oder
13.3 wahlweise einseitig oder beidseitig antreibbar ist und/oder
13.4 in Richtung parallel zur dritten Linearachse (Z) verschiebbar ist und/oder
13.5 zum Einspannen eines Werkstücks zur gleichzeitigen Bearbeitung durch die erste und die zweite Bearbeitungseinheit (28.1, 28.2) eingerichtet ist und/oder zum Einspannen eines ersten Werkstücks und eines zweiten Werkstücks derart eingerichtet ist, dass das erste Werkstück durch die erste Bearbeitungseinheit (28.1) bearbeitbar ist, während das zweite Werkstück durch die zweite Bearbeitungseinheit (28.2) bearbeitbar ist.

14. Werkzeugmaschine (1) nach einem der voranstehenden Ansprüche, **dadurch gekennzeichnet,**
**dass** jeder Bearbeitungseinheit (28.1, 28.2) ein Werkzeugmagazin (18) zugeordnet ist, das sternförmig um eine parallel zur dritten Linearachse (Z) verlaufende Magazinschwenkachse (20) angeordnete Werkzeuggreifer (19) aufweist, in denen Werkzeuge derart gehalten sind, dass die Achse der Werkzeuge parallel zur dritten Linearachse (Z) verläuft, wobei die jeweilige Arbeitsspindel durch Verfahren der Bewegungseinheiten Werkzeuge in das Werkzeugmagazin ablegen kann oder daraus abholen kann.

## Claims

1. Machine tool (1) comprising a base frame (2) with a first linear guide (4) and at least one first machining unit (28.1), which is movable along the first linear guide (4) on the base frame (2) in the direction of a first linear axis (X) and comprises the following movement units (31-35) that can be moved independently of one another by computer control:
a first movement unit (31) with a second linear guide (6), which first movement unit (31) is movable along the first linear guide (4) on the base frame (2) in the direction of the first linear axis (X),
a second movement unit (32) with a third linear guide (8), which second movement unit (32) is movable along the second linear guide (6) in the direction of a second linear axis (Y) extending transversely to the first linear axis (X),
a third movement unit (33) with a first pivot bearing (36), which third movement unit (33) is movable along the third linear guide (8) in the direction of a third linear axis (Z) that runs substantially horizontally and transversely to the first linear axis (X) and transversely to the second linear axis (Y),
a fourth movement unit (34) with a swivel head (38), which fourth movement unit (34) is pivotable about a first pivot axis (10) by means of the first pivot bearing (36) on the third movement unit (33),
a fifth movement unit (35), which is pivotable by means of at least one second pivot bearing (37) on the swivel head (38) about a second pivot axis (37) extending transversely to the first pivot axis (36), wherein a working spindle (13) is rotatably mounted on the fifth movement unit (35) about a spindle axis (24),
**characterized in**
**that** the working spindle (13) is mounted eccentrically on the fifth movement unit (35) at a distance (E) from the first and second pivot axes (10, 37), and
**that** a cover device (39) extending transversely to the third linear axis (Z) is provided to separate a working space (22) from the linear guides (4, 6, 8), which is provided with at least one opening (40) for the respective fifth movement unit (35), wherein the respective opening (40) is movable by means of the second movement unit (32) in the direction of the first and second linear axes (X, Y), wherein the fifth movement unit (35) is movable by movement of the third movement unit (33) in the direction of the third linear axis (Z) between an extended position (46), in which the fifth movement unit (35) is located within the working area (22), and a retracted position (47), in which the fifth movement unit (35) is located substantially behind the cover device (39); and/or
**that** a cover tunnel (43) is attached to the second movement unit (32), into which the fourth and fifth movement units (34, 35) can be retracted by moving the third movement unit (33) into a retracted position (47), and from which the fourth and fifth movement units (34, 35) can be moved into the working area (22) by moving the third movement unit (33).

2. Machine tool (1) according to claim 1, **characterized by** a second machining unit (28.2), wherein the first machining unit (28.1) and the second machining unit (28.2) are movable independently of one another along the first linear guide (4) on the base frame (2) in the direction of the first linear axis (X), wherein each of the first and second machining units (28.1, 28.2) comprises the first through fifth movement units (31-35), which are movable independently of one another under computer control,
wherein the work spindle (13) of each of the first and second machining units (28.1, 28.2) is mounted eccentrically on the fifth movement unit (35) at a distance (E) from the first and second pivot axes (36, 37).

3. Machine tool (1) according to claim 2, **characterized in that** the first and second machining units (28.1, 28.2) are designed to be mirror-symmetrical to one another.

4. Machine tool (1) according to claim 2 or 3, **characterized in that** the cover device (39) comprises a first cover (44) movable along with the second movement unit (32) of the first machining unit (28.1) in the direction of the first and second linear axes (X, Y) and having a first opening (40) and a second cover (44) movable along with the second movement unit (32) of the second machining unit (28.2) in the direction of the first and second linear axes (X, Y) and having a second opening (40).

5. Machine tool (1) according to any one of the preceding claims,
**characterized in that**
the swivel head (38) of the fourth movement unit (34) is a yoke (9) that surrounds the fifth movement unit (35), wherein the fifth movement unit (35) is pivotable on the yoke (9) by means of second pivot bearings (37) on opposite sides about the second pivot axis (37) that extends transversely to the first pivot axis (36).

6. Machine tool (1) according to any one of the preceding claims,
**characterized in that**
6.1 the first and second pivot axes (36, 37) lie in one plane and the work spindle (13) is mounted at a distance (E) from said plane, and/or
6.2 that the work spindle (13) is mounted eccentrically such that the contour of a headstock (11) for mounting the work spindle (13) protrudes transversely to the spindle axis (24) beyond the yoke (9), thereby forming the outer contour of a machining head formed from the fourth and fifth movement units (34, 35).

7. Machine tool (1) according to any one of the preceding claims,
**characterized in that**
7.1 the first linear axis (X) extends substantially horizontally and/or
7.2 that the second linear axis (Y) extends perpendicular to the first linear axis (X) and/or essentially vertically and/or
7.3 that the third linear axis (Z) and/or the first pivot axis (36) extends perpendicular to the first and second linear axes (X, Y) and/or
7.4 that the first pivot axis (36) extends parallel to the third linear axis (Z) and/or substantially horizontally and/or
7.5 that the second pivot axis (37) extends perpendicular to the first pivot axis (36) and/or intersects the first pivot axis (36) at a point of intersection.

8. Machine tool (1) according to any one of the preceding claims,
**characterized in that**
8.1 the first movement unit (31) comprises a column (3) and/or
8.2 the second movement unit (32) comprises a cross slide (5) and/or
8.3 that the third movement unit (33) comprises a carriage (5) and/or
8.4 that the fifth movement unit (35) comprises a headstock (11).

9. Machine tool (1) according to any one of the preceding claims,
**characterized in that**
the third linear guide (8) comprises guide rails (41) on the second movement unit (32) and that the third movement unit (32) comprises guide elements (42) movably guided on the guide rails (41) of the third linear guide (8).

10. Machine tool (1) according to any one of the preceding claims,
**characterized in that**
an open end of the cover tunnel (43) facing the working area (22) is connected to an associated opening (40) of the covering device (39).

11. Machine tool (1) according to any one of the preceding claims,
**characterized in that**
a scraper (45), mounted on the third movement unit (33) so as to move along with it, is provided for scraping at the cover tunnel (43).

12. Machine tool (1) according to any one of the preceding claims,
**characterized in that**
each movement unit (31-35) has its own drive that can be controlled and moved by a computer independently of the other movement units.

13. Machine tool (1) according to any one of the preceding claims,
**characterized in that**
a workpiece table (14) is further provided, which
13.1 is pivotable about a third pivot axis (15) arranged parallel to the first linear axis (X) and/or
13.2 is pivotably mounted on both sides and/or
13.3 can be driven optionally on one side or on both sides, and/or
13.4 is displaceable in a direction parallel to the third linear axis (Z), and/or
13.5 is configured to clamp a workpiece for simultaneous machining by the first and second machining units (28.1, 28.2) and/or is configured to clamp a first workpiece and a second workpiece such that the first workpiece can be machined by the first machining unit (28.1) while the second workpiece can be machined by the second machining unit (28.2).

14. Machine tool (1) according to any one of the preceding claims,
**characterized in that**
each machining unit (28.1, 28.2) is associated with a tool magazine (18) comprising tool grippers (19) arranged in star-shaped configuration about a magazine pivot axis (20) running parallel to the third linear axis (Z), in which tool grippers tools are held in such a way that the axis of the tools runs parallel to the third linear axis (Z), wherein the respective work spindle can deposit tools into the tool magazine or retrieve them therefrom by moving the movement units.

## Revendications

1. Machine-outil (1) comprenant un bâti de base (2) muni d'un premier guidage linéaire (4) et d'au moins une première unité d'usinage (28.1), qui est mobile le long du premier guidage linéaire (4) sur le bâti de base (2) dans la direction d'un premier axe linéaire (X) et qui comporte les unités de déplacement (31-35) suivantes, mobiles de manière indépendante les unes des autres et commandées par ordinateur:
une première unité de déplacement (31) comportant un deuxième guidage linéaire (6), cette première unité de déplacement (31) pouvant se déplacer sur le bâti de base (2) le long du premier guidage linéaire (4) dans la direction du premier axe linéaire (X) au moyen de la première guidage linéaire (4),
une deuxième unité de déplacement (32) comportant un troisième guidage linéaire (8), cette deuxième unité de déplacement (32) pouvant se déplacer sur le deuxième guidage linéaire (6) dans la direction d'un deuxième axe linéaire (Y) s'étendant transversalement au premier axe linéaire (X),
une troisième unité de déplacement (33) comportant un premier palier pivotant (36), cette troisième unité de déplacement (33) pouvant se déplacer sur le troisième guidage linéaire (8) dans la direction d'un troisième axe linéaire (Z) s'étendant essentiellement horizontalement et transversalement au premier axe linéaire (X) et transversalement au deuxième axe linéaire (Y),
une quatrième unité de déplacement (34) comportant une tête pivotante (38),
laquelle quatrième unité de déplacement (34) peut pivoter sur la troisième unité de déplacement (33) autour d'un premier axe de pivotement (10) au moyen du premier palier de pivotement (36),
une cinquième unité de déplacement (35) qui, au moyen d'au moins un deuxième palier de pivotement (37), est fixée à la tête pivotante (38) autour d'un deuxième axe de pivotement (37) s'étendant transversalement au premier axe de pivotement (36), une broche de travail (13) étant disposée sur la cinquième unité de déplacement (35) de manière à pouvoir tourner autour d'un axe de broche (24),
**caractérisée en ce que**
la broche de travail (13) est montée de manière excentrique à une distance (E) des premier et deuxième axes de pivotement (10, 37) sur la cinquième unité de déplacement (35) et
un dispositif de recouvrement s'étendant transversalement au troisième axe linéaire (Z) est prévu pour
isoler un espace de travail (22) des guidages linéaires (4, 6, 8) et est muni d'au moins une ouverture (40) pour la cinquième unité de déplacement (35) correspondante, l'ouverture (40) correspondante pouvant être déplacée au moyen de la deuxième unité de déplacement (32) dans la direction des premier et deuxième axes linéaires (X, Y); la cinquième unité de déplacement (35) pouvant être déplacée par le mouvement de la troisième unité de déplacement (33) dans la direction du troisième axe linéaire (Z) entre une position avancée (46), dans laquelle la cinquième unité de déplacement (35) est disposée dans l'espace de travail (22), et une position rétractée (47), dans laquelle la cinquième unité de déplacement (35) est disposée essentiellement derrière le dispositif de recouvrement (39); et/ou
un tunnel de couverture (43) est fixé à la deuxième unité de déplacement (32), dans lequel les quatrième et cinquième unités de déplacement (34, 35) peuvent être rentrées dans une position rétractée (47) par le déplacement de la troisième unité de déplacement (33); et à partir duquel les quatrième et cinquième unités de déplacement (34, 35) peuvent être amenées dans l'espace de travail (22) par le déplacement de la troisième unité de déplacement (33).

2. Machine-outil (1) selon la revendication 1, **caractérisée par** une deuxième unité d'usinage (28.2), la première unité d'usinage (28.1) et la deuxième unité d'usinage (28.2) pouvant se déplacer indépendamment l'une de l'autre le long du premier guidage linéaire (4) sur le bâti de base (2) dans la direction du premier axe linéaire (X),
chacune des première et deuxième unités d'usinage (28.1, 28.2) comportant les première à cinquième unités de déplacement (31-35), qui sont mobiles de manière indépendante les unes des autres sous commande informatique,
la broche de travail (13) de chacune des première et deuxième unités d'usinage (28.1, 28.2) est montée de manière excentrique à une distance (E) des premier et deuxième axes de pivotement (36, 37) sur la cinquième unité de déplacement (35).

3. Machine-outil (1) selon la revendication 2, **caractérisée en ce que** les première et deuxième unités d'usinage (28.1, 28.2) sont conçues de manière symétrique l'une par rapport à l'autre.

4. Machine-outil (1) selon la revendication 2 ou 3, **caractérisée en ce que** le dispositif de couverture (39) comprend un premier capot (44) mobile conjointement avec la deuxième unité de déplacement (32) de la première unité d'usinage (28.1) dans la direction des premier et deuxième axes linéaires (X, Y) et comportant une première ouverture (40), ainsi qu'un deuxième capot (44) mobile conjointement avec la deuxième unité de déplacement (32) de la deuxième unité d'usinage (28.2) dans la direction des premier et deuxième axes linéaires (X, Y) et comportant une deuxième ouverture (40).

5. Machine-outil (1) selon l'une quelconque des revendications précédentes,
**caractérisée en ce que**
la tête pivotante (38) de la quatrième unité de déplacement (34) est une tête en fourche (9) qui entoure la cinquième unité de déplacement (35), la cinquième unité de déplacement (35) pouvant pivoter au moyen de seconds paliers de pivotement (37) fixés sur la tête en fourche (9) de part et d'autre de celle-ci, autour d'un deuxième axe de pivotement (37) s'étendant transversalement au premier axe de pivotement (36).

6. Machine-outil (1) selon l'une quelconque des revendications précédentes,
**caractérisée en ce que**
6.1 que les premier et deuxième axes de pivotement (36, 37) se trouvent dans un même plan et que la broche de travail (13) est montée à une distance (E) de ce plan et/ou
6.2 que la broche de travail (13) est montée de manière excentrique de telle sorte que le contour d'un caisson de broche (11) destiné à supporter la broche de travail (13) dépasse transversalement à l'axe de broche (24) au-delà de la tête en fourche (9) et forme ainsi le contour extérieur d'une tête d'usinage constituée des quatrième et cinquième unités de mouvement (34, 35).

7. Machine-outil (1) selon l'une quelconque des revendications précédentes,
**caractérisée en ce que**
7.1 le premier axe linéaire (X) s'étend essentiellement horizontalement et/ou
7.2 le deuxième axe linéaire (Y) s'étend perpendiculairement au premier axe linéaire (X) et/ou sensiblement verticalement et/ou
7.3 le troisième axe linéaire (Z) et/ou le premier axe de pivotement (36) s'étend perpendiculairement aux premier et deuxième axes linéaires (X, Y) et/ou
7.4 le premier axe de pivotement (36) s'étend parallèlement au troisième axe linéaire (Z) et/ou sensiblement horizontalement et/ou
7.5 le deuxième axe de pivotement (37) s'étend perpendiculairement au premier axe de pivotement (36) et/ou coupe le premier axe de pivotement (36) en un point d'intersection.

8. Machine-outil (1) selon l'une quelconque des revendications précédentes,
**caractérisée en ce que**
8.1 la première unité de déplacement (31) comporte un montant (3) et/ou
8.2 la deuxième unité de déplacement (32) comporte un chariot croisé (5) et/ou
8.3 la troisième unité de déplacement (33) comporte un chariot (5) et/ou
8.4 la cinquième unité de déplacement (35) comporte un caisson de broche (11).

9. Machine-outil (1) selon l'une quelconque des revendications précédentes,
**caractérisée en ce que**
le troisième guidage linéaire (8) comporte des rails de guidage (41) sur la deuxième unité de déplacement (32) et **en ce que** la troisième unité de déplacement (32) comporte des éléments de guidage (42) guidés de manière mobile sur les rails de guidage (41) du troisième guidage linéaire (8).

10. Machine-outil (1) selon l'une quelconque des revendications précédentes,
**caractérisée en ce**
**qu'**une extrémité ouverte du tunnel de couverture (43), orientée vers l'espace de travail (22), est reliée à une ouverture associée (40) du dispositif de recouvrement (39).

11. Machine-outil (1) selon l'une quelconque des revendications précédentes,
**caractérisée en ce**
**qu'**un racleur (45), fixé de manière à se déplacer conjointement avec la troisième unité de déplacement (33), est prévu pour racler le tunnel de couverture (43).

12. Machine-outil (1) selon l'une quelconque des revendications précédentes,
**caractérisée en ce que**
chaque unité de déplacement (31-35) comporte son propre entraînement commandé par ordinateur, pouvant être piloté et déplacé indépendamment des autres unités de déplacement.

13. Machine-outil (1) selon l'une quelconque des revendications précédentes,
**caractérisée en ce**
**qu'**il est en outre prévu une table porte-pièce (14) qui
13.1 peut pivoter autour d'un troisième axe de pivotement (15) disposé parallèlement au premier axe linéaire (X) et/ou
13.2 est montée de manière à pouvoir pivoter des deux côtés et/ou
13.3 peut être entraînée au choix d'un seul côté ou des deux côtés et/ou
13.4 est déplaçable dans une direction parallèle au troisième axe linéaire (Z) et/ou
13.5 est agencée pour le serrage d'une pièce en vue d'un usinage simultané par la première et la deuxième unité d'usinage (28.1, 28.2) et/ou est agencé pour le serrage d'une première pièce et d'une deuxième pièce de telle sorte que la première pièce puisse être usinée par la première unité d'usinage (28.1), tandis que la deuxième pièce peut être usinée par la deuxième unité d'usinage (28.2).

14. Machine-outil (1) selon l'une quelconque des revendications précédentes,
**caractérisée en ce que**
chaque unité d'usinage (28.1, 28.2) est associée à un magasin d'outils (18) comprenant des préhenseurs d'outil disposés en étoile autour d'un axe de pivotement du magasin (20) s'étendant parallèlement au troisième axe linéaire (Z), dans lesdits préhenseurs d'outil les outils sont maintenus de telle sorte que l'axe des outils s'étend parallèlement au troisième axe linéaire (Z), la broche de travail respective pouvant déposer des outils dans le magasin d'outils ou en retirer en déplaçant les unités de déplacement.
